# EUROPEAN PATENT SPECIFICATION

(11) **EP 1 097 632 B1**
(45) Date of publication and mention of the grant of the patent: **09.03.2005**
(21) Application number: 00203650.7
(22) Date of filing: 19.10.2000
(51) Int. Cl.: A01G 9/12, F16B 15/00

(54) **Device for attaching an object**
Vorrichtung zum Feststellen eines Gegenstandes
Dispositif pour attacher un objet

(30) Priority: 02.11.1999 NL 1013463; 05.07.2000 NL 1015623
(43) Date of publication of application: 09.05.2001
(73) Proprietor: Koenders, Robèr Hermanus Wilhelmus, 7576 ZV Oldenzaal (NL)
(72) Inventor: Koenders, Robèr Hermanus Wilhelmus, 7576 ZV Oldenzaal (NL)
(74) Representative: 't Jong, Bastiaan Jacob

(56) References cited:
- DE-A- 2 320 020
- DE-C- 543 389
- US-A- 3 611 708
- US-A- 3 811 269
- US-A- 4 941 630

## Description

The invention relates to a combination of a penetrable layer and a device for attaching an object to said layer.

Bamboo sticks or so-called moss poles are usually used to support plants. Normally used to attach a plant to a moss pole are pins which are inserted into the moss of the pole, whereby the stem of a plant is attached to the pole.

For some time now so-called moss poles have no longer been provided with a layer of moss but with a layer of coconut fibre. This coconut fibre is stiffer than the moss and more force is therefore required to insert a pin into the layer of coconut fibre. In order to reduce this insertion force pins have been developed consisting of a bent wire, wherein the ends are cut obliquely, so that the ends finish in a point. The drawback of such a pin is that the point is situated on the peripheral surface of the wire. This results in the possibility that when the pin is inserted into the coconut layer the point makes contact with the layer located thereunder, for instance of a PVC tube around which the coconut layer is arranged, and that the point hooks into this layer, whereby the insertion force required becomes considerably greater.

The cutting further results in barbs which snag in the coconut fibres, whereby the insertion force is likewise increased.

It is an object of the present invention to obviate the above stated drawback.

This objective is achieved according to the invention with a combination according to claim 1.

It hereby becomes possible to place the pin into the moss pole at a certain angle to the underlying surface of for instance PVC pipe. The pin slides with its sliding surface over the pipe surface without the point gripping in this surface.

The point preferably lies, as seen in axial direction, within the peripheral surface of the wire, whereby the pin is easy to manufacture because there is a sliding surface present all round.

The point preferably lies substantially on the central axis of the wire. A symmetrical outer end is thus obtained and bending of the wire can be performed irrespective of the orientation of the point relative to the peripheral surface of the wire.

The outer end can be conical or pyramid-shaped, depending on the machining method applied.

In a preferred embodiment the wire is U-shaped and both ends finish in a point, wherein each point, as seen in axial direction, lies within the peripheral surface of the wire. Owing to this U-shape the object can be readily secured in the U and thus attached. The wire preferably comprises a curvature adapted to a plant stem, so that this plant stem is not squeezed too hard.

The device according to the invention, comprises the steps of manufacturing, to be performed in appropriate sequence, of:
(a) cutting a piece of wire end from a wire supply;
(b) bending the wire end into a suitable form;
(c) machining at least one outer end of the wire end such that the point has a sliding surface directed toward the less readily penetrable layer relative to the object receiving space.

Already known pins are manufactured by cutting a wire end obliquely and then bending this wire end. The oblique cutting results in a point which lies in the peripheral surface of the wire.

The point is preferably arranged on the outer end of the wire by means of a machining operation. This operation can be pressing, forging or grinding. The advantage of this additional machining is that burrs which occur due to the cutting of the wire end do not remain. Insertion of the pin into a coconut fibre layer is hereby simplified since burrs, on which coconut fibres can snag and which can thus increase the insertion force, are no longer present.

These and other features of the present invention are further elucidated with reference to the annexed drawings:
figure 1 shows a perspective view of a prior art device;
figure 2 shows an enlarged view of an outer end of the device of figure 1;
figure 3 is a perspective view of a preferred embodiment according to the invention;
figure 4 shows an enlarged view of an outer end of the device of figure 3;
figure 5 shows an enlarged view of an outer end of a second embodiment according to the invention;
figure 6 shows a device according to the invention arranged on a so-called moss pole;
figure 7 shows a view corresponding with figure 3 of another device according to the invention; and
figure 8 shows a view along arrow VIII in figure 6 of the device of figure 7.

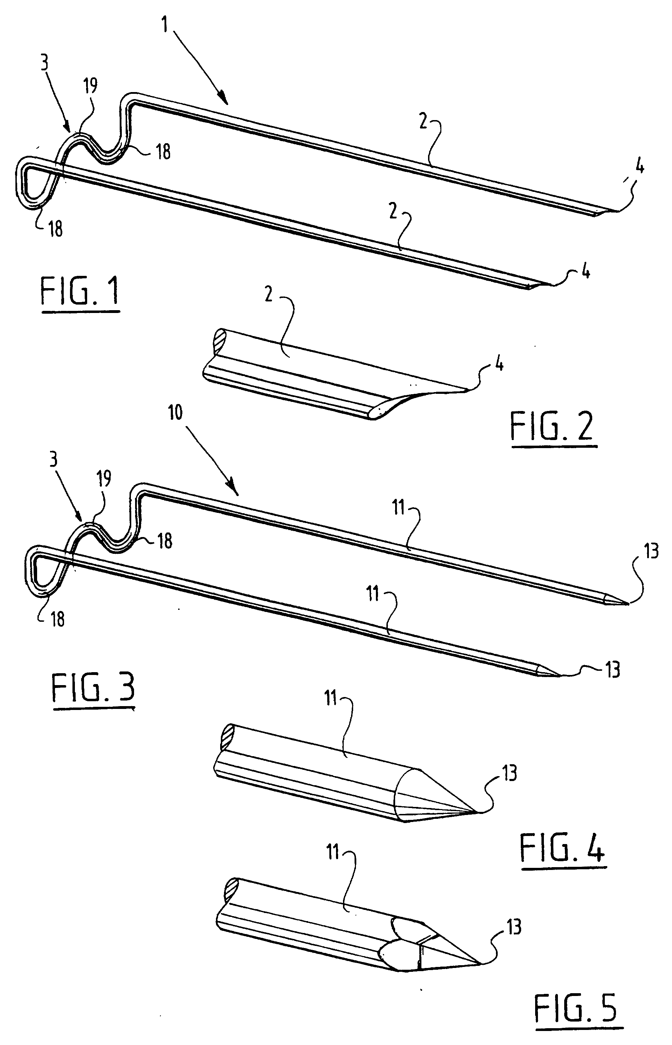

Figure 1 shows a pin 1 according to the prior art. This pin comprises two elongate legs 2 and a connecting piece 3. This latter comprises two plant receiving spaces 18 and a partition 19. The elongate legs 2 end in a point 4. In a pin 1 according to the prior art this point 4 lies on the peripheral surface of elongate leg 2, whereby it can easily hook into a surface when it is inserted for instance into a moss pole.

Figure 3 shows a pin 10 according to the invention. This pin also comprises two elongate legs 11 and a connecting piece 3. The outer ends of elongate legs 11 likewise end in a point 13, which however lies according to the invention within a peripheral surface of elongate legs 11 as seen in axial direction.

This can be obtained in simple manner by giving the outer end of elongate leg 11 a conical form (see figure 4).

As shown in figure 5, the outer end of elongate leg 11 can also be pyramid-shaped.

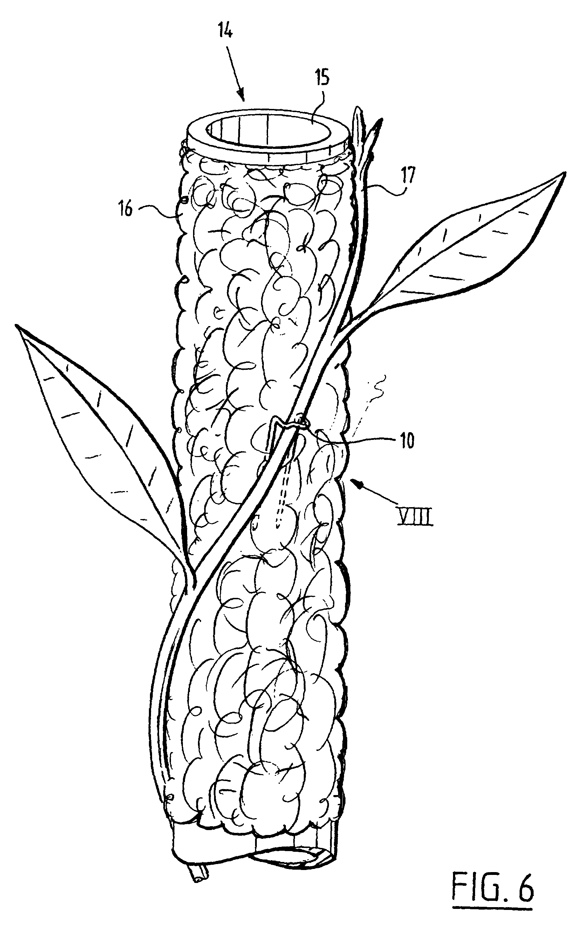

Figure 6 shows an application of the device 10 according to the invention. Shown in this figure is a so-called moss pole 14 which comprises a PVC pipe 15, which is less readily penetrable, and a layer of coconut fibre 16 arranged thereon which is more readily penetrable by a device 10 according to the invention. The stem 17 of a plant can be attached to moss pole 14 with this device 10.

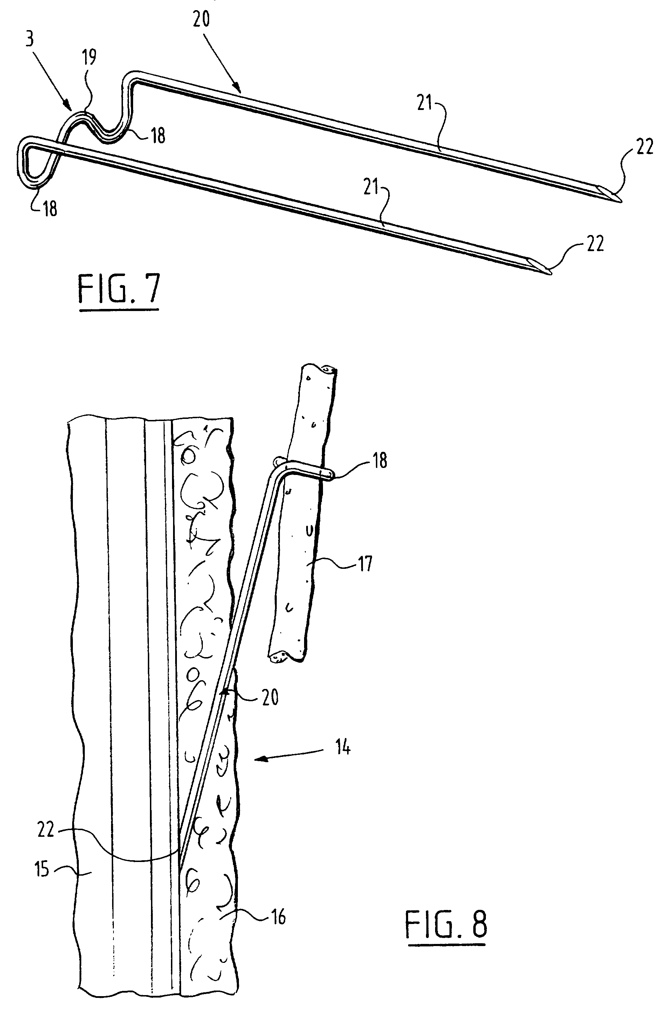

Figure 7 shows a pin 20 which is provided with two legs 21 and a connecting piece 3 provided with plant receiving spaces 18 separated by a partition 19. Both points 21 are provided with a sliding surface 22. Both sliding surfaces are directed toward the less readily penetrable layer, or PVC tube 15, relative to the plant receiving space 18. As figure 8 shows, when pin 20 is inserted into the layer of coconut fibre 16 and comes up against the PVC pipe 15, it will slide downward over the pipe surface without catching or snagging therein.

## Claims

1. Combination of a penetrable layer (16) which is arranged on a less readily penetrable layer (15), in particular a moss pole (14), and a device (10, 20) for attaching an object (17) to said penetrable layer (16), which device (10, 20) comprises a bent, form-retaining wire provided with an object receiving space (18), at least one end of which wire finishes in a point (13, 22),
wherein in attached position,
the point (13, 22) has a sliding surface directed toward the less readily penetrable layer (15) relative to the object receiving space (18).

2. Combination as claimed in claim 1,
**characterized in that**
the point (13) lies, as seen in axial direction, within the peripheral surface of the wire.

3. Combination as claimed in claim 2,
**characterized in that**
the point (13) lies substantially on the central axis of the wire.

4. Combination as claimed in claim 2,
**characterized in that**
the outer end (13) is conical.

5. Combination as claimed in claim 2,
**characterized in that**
the outer end (13) is pyramid-shaped.

6. Combiantion as claimed in claim 2,
**characterized in that**
the wire is U-shaped and both ends (11, 21) finish in a point (13, 22), wherein each point (13, 22), as seen in axial direction, lies within the peripheral surface of the wire.

7. Combination as claimed in claims 1-6,
**characterized in that**
the wire comprises at least one object receiving space (18) adapted to a plant stem (17).

## Patentansprüche

1. Kombination einer durchdringbaren Schicht (16), die auf einer weniger einfach durchdringbaren Schicht (15) angeordnet ist, insbesondere eines Moosstabes (14), und einer Vorrichtung (10, 20) zum Befestigen eines Gegenstandes (17) an der durchdringbaren Schicht (16), wobei die Vorrichtung (10, 20), einen gebogenen, formstabilen Draht aufweist, der mit einem Gegenstandsaufnahmeraum (18) versehen ist und von dem wenigstens ein Ende in einer Spitze (13, 22) endet,
wobei die Spitze (13, 22) in der Befestigungsstellung eine Gleitfläche hat, die relativ zu dem Gegenstandsaufnahmeraum (18) zu der weniger einfach durchdringbaren Schicht (15) hin gerichtet ist.

2. Kombination nach Anspruch 1,
**dadurch gekennzeichnet,**
**dass** die Spitze (13) in axialer Richtung gesehen innerhalb der Umfangsfläche des Drahtes liegt.

3. Kombination nach Anspruch 2,
**dadurch gekennzeichnet,**
**dass** die Spitze (13) im Wesentlichen auf der Mittelachse des Drahtes liegt.

4. Kombination nach Anspruch 2,
**dadurch gekennzeichnet,**
**dass** das Außenende (13) konisch ist.

5. Kombination nach Anspruch 2,
**dadurch gekennzeichnet,**
**dass** das Außenende (13) pyramidenförmig ist.

6. Kombination nach Anspruch 2,
**dadurch gekennzeichnet,**
**dass** der Draht U-förmig ist und beide Enden (11, 21) in einer Spitze (13, 22) enden, wobei jede Spitze (13, 22) in axialer Richtung gesehen innerhalb der Umfangsfläche des Drahtes liegt.

7. Kombination nach einem der Ansprüche 1 bis 6,
**dadurch gekennzeichnet,**
**dass** der Draht wenigstens einen an einen Pflanzenstiel (17) angepassten Gegenstandsaufnahmeraum (18) aufweist.

## Revendications

1. Combinaison d'une couche de pénétration (16) placée sur une couche moins facilement pénétrable (15), en particulier un tuteur à mousse (14), et d'un dispositif (10, 20) pour fixer un objet (17) sur ladite couche de pénétration (16), dispositif (10, 20) comprenant un fil de métal courbé à mémoire de forme muni d'un espace de réception d'objet (18), au moins une extrémité de ce fil de métal se terminant par une pointe (13, 22), selon laquelle, dans une position fixée, la pointe (13, 22) possède une surface de glissement dirigée vers la couche la moins facilement pénétrable (15) par rapport l'espace de réception d'objet (18).

2. Combinaison selon la revendication 1, **caractérisée en ce que** la pointe (13) s'étend, en direction axiale, à l'intérieur de la surface de périphérie du fil de métal.

3. Combinaison selon la revendication 2, **caractérisée en ce que** la pointe (13) s'étend sensiblement sur l'axe central du fil de métal.

4. Combinaison selon la revendication 2, **caractérisée en ce que** l'extrémité externe (13) est conique.

5. Combinaison selon la revendication 2, **caractérisée en ce que** l'extrémité externe (13) est de forme pyramidale.

6. Combinaison selon la revendication 2, **caractérisée en ce que** le fil de métal est de forme en U et les deux extrémités (11, 21) se terminent par une pointe (13, 22), chaque pointe (13, 22) s'étendant en direction axiale dans la surface de périphérie du fil de métal.

7. Combinaison selon les revendications 1 à 6, **caractérisée en ce que** le fil de métal comprend au moins un espace de réception d'objet (18) prévu pour une tige de plante (17).
